# EUROPEAN PATENT APPLICATION

(11) **EP 2 202 400 A2**
(43) Date of publication of application: **30.06.2010**
(21) Application number: 09180553.1
(22) Date of filing: 23.12.2009
(51) Int. Cl.: F02D 41/02

(54) **Vehicle engine output controller**

(30) Priority: 26.12.2008 JP 2008333900
(71) Applicant: Toyota Jidosha Kabushiki Kaisha, Toyota-shi, Aichi-ken, 471-8571 (JP)
(72) Inventor: Saigo, Yusuke, Aichi-ken 471-8571 (JP)
(74) Representative: Pautex Schneider, Nicole Véronique

(57) **Abstract**

In a vehicle engine output controller in which a torque request signal that requires a change in engine output in response to shift operation of an automatic transmission is generated by a transmission control computer (TCC) and at least control over injectors (23) is executed by an engine control computer (ECC) in response to the torque request signal, the ECC generates a first control signal (q1) that controls the injectors (23) in accordance with the torque request signal, and one of the TCC and ECC generates a second control signal (q2) of which a required fuel injection amount temporarily becomes larger than that of the first control signal (q1) and that controls specific actuators (24, 36 and 62) other than the injectors (23), and the ECC controls the specific actuators (24, 36 and 62) under a condition that is different from a condition under which the injectors (23) are controlled in accordance with the torque request signal.

## Description

### BACKGROUND OF THE INVENTION

### 1. Field of the Invention

The invention relates to a vehicle engine output controller and, more particularly, to a vehicle engine output controller that controls the torque output from an electronically controlled engine in response to a torque request from a transmission control computer in a vehicle equipped with the engine and an automatic transmission when the automatic transmission shifts speeds.

### 2. Description of the Related Art

Some of vehicles equipped with an electronically controlled engine and an automatic transmission include a device that outputs a torque request signal (here, this means a torque change request signal, such as a torque increase request signal and a torque reduction request signal) from a transmission control computer, which electronically controls the automatic transmission, to an engine control computer, which electronically controls the engine, at the time of shifting to control the torque output from the engine suitable for shifting in order to reduce shift shock and improve response.

There is known an existing vehicle engine output controller of this type. For example, the vehicle engine output controller controls an EGR rate from an exhaust passage to an intake passage through an exhaust gas recirculation (EGR) passage on the basis of a fuel injection amount during normal times, while, during shifting, instead of the above control, the vehicle engine output controller controls the EGR rate on the basis of an engine output torque predicted on the basis of an output request to the engine and a shift mode of the transmission (for example, see Japanese Patent Application Publication No. 2004-144027 (JP-A-2004-144027)).

In addition, there is also known a controller that, when an increase in engine load is predicted from road information, driver's driving operation, and the like, increases the ratio of an internal EGR rate based on a valve overlap between exhaust and intake strokes of the engine to an external EGR rate through the EGR passage before the load fluctuation actually occurs to allow an immediate decrease in EGR rate upon an increase in engine load to thereby eliminate a decrease in exhaust emission due to a delay in response of EGR and a delay in response due to limitations on fuel injection amount (for example, see Japanese Patent Application Publication No. 2007-303437 (JP-A-2007-303437)).

However, in the above described existing vehicle engine output controllers, during shifting, a torque request signal is output from the transmission control computer to the engine control computer on the basis of an engine output torque required after the shifting, and then a fuel injection amount, an injection pressure, a diesel throttle, an EGR rate (external EGR rate), and the like, are controlled at the same time on the basis of the torque request signal. Therefore, for example, there is a problem that, in a common-rail diesel engine with a turbocharger, an increase in supercharging pressure or injection pressure at the engine does not catch up with a torque increase request during downshifting to limit the fuel injection amount, and it is difficult to obtain high response to a torque increase request.

In addition, at the time of a torque reduction request, in addition to a decrease in injection amount corresponding to the torque reduction request and a decrease in engine rotational speed in accordance with that, an EGR opening value calculated from a map of injection amount versus engine rotational speed reflects the torque reduction request to steeply increase. Therefore, there is a problem that smoke easily occurs because of an excessive EGR rate and, as a result, exhaust gas purification performance decreases.

### SUMMARY OF THE INVENTION

The invention provides a vehicle engine output controller that is able to responsively control a torque by an engine control computer in response to a torque request from a transmission control computer during shifting and, in addition, is able to effectively suppress a decrease in exhaust gas purification performance.

An aspect of the invention provides a vehicle engine output controller. The vehicle engine output controller includes: an engine control computer that electronically controls an engine by controlling a plurality of actuators equipped for the engine so as to control an operating state of the engine; shift request detecting means that requires an automatic transmission, which is mounted on a vehicle together with the engine and is able to shift the speed of power output from the engine, to shift speeds; and a transmission control computer that electronically controls the automatic transmission on the basis of the operating state of the vehicle. When a shift request signal is detected by the shift request detecting means, a torque request signal that requires a torque output from the engine to vary in response to shift operation of the automatic transmission is generated by the transmission control computer, and the engine control computer controls at least a first actuator that actually carries out fuel injection in the engine among the plurality of actuators in accordance with the torque request signal. Here, the engine control computer generates a first control signal that requires a fuel injection amount to vary in accordance with the torque request signal when the shift request signal is detected by the shift request detecting means and that controls the first actuator, one of the transmission control computer and the engine control computer generates a second control signal of which a required fuel injection amount temporarily becomes larger than that of the first control signal when the shift request signal is detected by the shift request detecting means and that controls a specific actuator other than the first actuator among the plurality of actuators, and the engine control computer controls the specific actuator under a condition different from a condition under which the first actuator is controlled in accordance with the torque request signal.

According to the above vehicle engine output controller, as a shift request signal is detected by the shift request detecting means, the first control signal that requires a fuel injection amount to vary in accordance with the torque request signal and the second control signal of which a required fuel injection amount temporarily becomes larger than that of the first control signal are generated, and the specific actuator is controlled under a condition different from a condition under which the first actuator is controlled in accordance with the torque request signal. This eliminates the problem that an injection amount is limited because of a delay in response of the specific actuator in response to a torque increase request. Thus, it is possible to obtain high response to the torque increase request. In addition, at the time of a torque reduction request, it is possible to prevent a situation that, because of a decrease in injection amount corresponding to the torque reduction request and a decrease in engine rotational speed in accordance with the decrease in injection amount, the controlled variable of the specific actuator steeply varies on the basis of the injection amount and the engine rotational speed to adversely influence exhaust gas purification performance, or the like.

In addition, in the vehicle engine output controller, the engine control computer may include a first control signal generating unit and a control signal selecting unit, wherein, when a shift request signal is detected by the shift request detecting means, the first control signal generating unit may generate the first control signal that requires a fuel injection amount corresponding to the torque request signal, and wherein, when a shift request signal is detected by the shift request detecting means, the control signal selecting unit may select a control signal, of which the required fuel injection amount is larger, between the first control signal and the second control signal and then may control the specific actuator using the control signal of which the required fuel injection amount is larger, and one of the transmission control computer and the engine control computer may include a second control signal generating unit, wherein, when a shift request signal is detected by the shift request detecting means, the second control signal generating unit may generate the second control signal that requires a fuel injection amount that does not correspond to the torque request signal.

According to the above vehicle engine output controller, in the case of a torque increase request, when the second control signal is generated prior to the first control signal at the time when a shift request signal is detected by the shift request detecting means, the specific actuator is actuated prior to the torque increase request. This eliminates a situation that an injection amount is limited because of a delay in response of the specific actuator. Thus, it is possible to obtain high response to the torque increase request. In addition, in the case of a torque reduction request, even when the first control signal steeply decreases because of a decrease in injection amount corresponding to the torque reduction request and a decrease in engine rotational speed in accordance with the decrease in injection amount, the controlled variable of the specific actuator is guarded by the controlled variable of the second control signal. This prevents adverse influence, or the like, on exhaust gas purification performance due to a steep variation in the controlled variable of the specific actuator.

In addition, in the vehicle engine output controller, when the torque request signal from the transmission control computer is a torque increase request signal that requires a torque output from the engine to increase in response to shift operation of the automatic transmission, one of the transmission control computer and the engine control computer may generate a prospective torque request signal before transmission of the torque increase request signal on the basis of information detected by the shift request detecting means, and the engine control computer may start controlling the specific actuator using the second control signal corresponding to the prospective torque request signal before the first actuator is controlled in accordance with the torque increase request signal.

According to the above vehicle engine output controller, the specific actuator is actuated prior to the torque increase request. This eliminates a situation that an injection amount is limited because of a delay in response of the specific actuator. This ensures high response such that a target rotational speed can be promptly reached in response to the torque request.

In the vehicle engine output controller, when the torque request signal from the transmission control computer is a torque reduction request signal that requires a torque output from the engine to reduce in response to shift operation of the automatic transmission, one of the transmission control computer and the engine control computer may generate the second control signal so as to vary on the basis of an actual fuel injection amount without reflecting the torque request signal at the time when the automatic transmission shifts speeds, and the engine control computer may change control over the specific actuator using the second control signal on the basis of the actual fuel injection amount independent of control over the first actuator in accordance with the torque reduction request signal.

According to the above vehicle engine output controller, in the case of a torque reduction request, even when the first control signal steeply decreases because of a decrease in injection amount corresponding to the torque reduction request and a decrease in engine rotational speed in accordance with the decrease in injection amount, the controlled variable of the specific actuator is guarded by the controlled variable of the second control signal that varies in accordance with the actual fuel injection amount. This prevents adverse influence, or the like, on exhaust gas purification performance due to a steep variation in the controlled variable.

In addition, in the vehicle engine output controller, the engine may be a diesel engine, and the specific actuator may include a second actuator that controls intake air of the engine.

According to the above vehicle engine output controller, in the case of a torque increase request, when the second control signal is generated prior to the first control signal at the time when a shift request signal is detected by the shift request detecting means, the second actuator that controls intake air is actuated prior to the torque increase request. This eliminates a situation that an injection amount is limited because of a delay in response of the intake system. Thus, it is possible to obtain high response to the torque increase request. In addition, in the case of a torque reduction request, even when the first control signal steeply decreases because of a decrease in injection amount corresponding to the torque reduction request and a decrease in engine rotational speed in accordance with the decrease in injection amount, the controlled variable of the second actuator that controls intake air is guarded by the controlled variable of the second control signal. This prevents adverse influence, or the like, on exhaust gas purification performance due to a steep variation in the controlled variable.

In addition, in the vehicle engine output controller, the engine may be a diesel engine with a common rail that accumulates and stores fuel at a high pressure, and the specific actuator may include a third actuator that controls an amount of high-pressure fuel supplied to the common rail.

According to the above vehicle engine output controller, in the case of a torque increase request, when the second control signal is generated prior to the first control signal at the time when a shift request signal is detected by the shift request detecting means, the third actuator that changes the common rail pressure is actuated prior to the torque increase request. This eliminates a situation that an injection amount is limited because of a delay in response of fuel injection pressure. Thus, it is possible to obtain high response to the torque increase request.

In addition, in the vehicle engine output controller, the engine may have an exhaust gas recirculation passage from an exhaust side to an intake side, wherein the second actuator includes a diesel throttle valve that controls an amount of intake fresh air in intake air of the engine while changing an exhaust gas recirculation rate through the exhaust gas recirculation passage.

According to the vehicle engine output controller, in the case of a torque increase request, when the second control signal is generated prior to the first control signal at the time when a shift request signal is detected by the shift request detecting means, the second actuator that controls an intake air flow rate and an EGR rate is actuated prior to the torque increase request. This eliminates a situation that an injection amount is limited because of a delay in response of the intake system. Thus, it is possible to obtain high response to the torque increase request. In addition, in the case of a torque reduction request, even when the first control signal steeply decreases because of a decrease in injection amount corresponding to the torque reduction request and a decrease in engine rotational speed in accordance with the decrease in injection amount, the controlled variable of the second actuator that controls an intake air flow rate and an EGR rate is guarded by the controlled variable of the second control signal. This prevents adverse influence, or the like, on exhaust gas purification performance due to an excessive EGR rate.

In addition, in the vehicle engine output controller, the engine may have an exhaust gas recirculation passage from an exhaust side to an intake side, and the second actuator may have an exhaust gas recirculation valve that controls an exhaust gas recirculation rate through the exhaust gas recirculation passage.

According to the above vehicle engine output controller, in the case of a torque increase request, when the second control signal is generated prior to the first control signal at the time when a shift request signal is detected by the shift request detecting means, the second actuator that controls an EGR rate is actuated prior to the torque increase request. This eliminates a situation that an injection amount is limited because of a delay in response of the EGR rate. Thus, it is possible to obtain high response to the torque increase request. In addition, in the case of a torque reduction request, even when the first control signal steeply decreases because of a decrease in injection amount corresponding to the torque reduction request and a decrease in engine rotational speed in accordance with the decrease in injection amount, the controlled variable of the second actuator that controls an EGR rate is guarded by the controlled variable of the second control signal. This prevents adverse influence, or the like, on exhaust gas purification performance due to an excessive EGR rate.

In addition, in the vehicle engine output controller, the transmission control computer may have a stepped shift control mode in which the automatic transmission is controlled in accordance with stepped shift operation, and one of the transmission control computer and the engine control computer may output the prospective torque request signal at the time of shifting in accordance the shift operation in the stepped shift control mode.

According to the above vehicle engine output controller, a high-response torque increase is possible to shift operation in the stepped shift control mode that requires high torque response. This improves drivability of the vehicle.

Note that, when the engine includes an exhaust gas recirculation passage from an exhaust side to an intake side and also includes a variable capacity turbocharger, which supercharges the intake air, or an exhaust throttle valve, the second actuator may include an actuator for variably controlling the capacity of the turbocharger or an actuator for controlling the exhaust throttle valve:

According to the aspect of the invention, when a shift request signal is detected by the shift request detecting means, a first control signal that varies in accordance with a torque request signal and a second control signal of which a required fuel injection amount temporarily becomes larger than that of the first control signal when a shift request signal is detected by the shift request detecting means are generated, and the specific actuator is controlled under a condition different from a condition under which the first actuator is controlled in accordance with the torque request signal. This eliminates the problem that an injection amount is limited because of a delay in response of the specific actuator at the time of a torque increase request, and it is possible to obtain high response to the torque increase request. In addition, because of a decrease in injection amount corresponding to the torque reduction request and a decrease in engine rotational speed in accordance with the decrease in injection amount, a steep variation in controlled variable of the specific actuator based on an injection amount and an engine rotational speed is suppressed to make it possible to prevent adverse influence on exhaust gas purification performance, or the like. As a result, it is possible to provide a vehicle engine output control, which is able to carry out high response torque control in the engine control computer in response to a torque request from the transmission control computer during shifting and, in addition, is able to effectively suppress a decrease in exhaust gas purification performance.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a block diagram that shows the conceptual configuration of an output controller for a vehicle engine according to an embodiment of the invention;
FIG. 2 is a schematic configuration diagram of the vehicle engine and the output controller according to the embodiment of the invention, and shows an example in which the aspect of the invention is applied to a multi-cylinder diesel engine;
FIG. 3 is a timing chart that shows an example of output control at the time when a torque increase request is issued, the output control being executed in the output controller for the vehicle engine according to the embodiment of the invention; and
FIG. 4 is a timing chart that shows an example of output control at the time when a torque reduction request is issued, the output control being executed in the output controller for the vehicle engine according to the embodiment of the invention.

### DETAILED DESCRIPTION OF EMBODIMENTS

Hereinafter, an embodiment of the invention will be described with reference to the accompanying drawings.

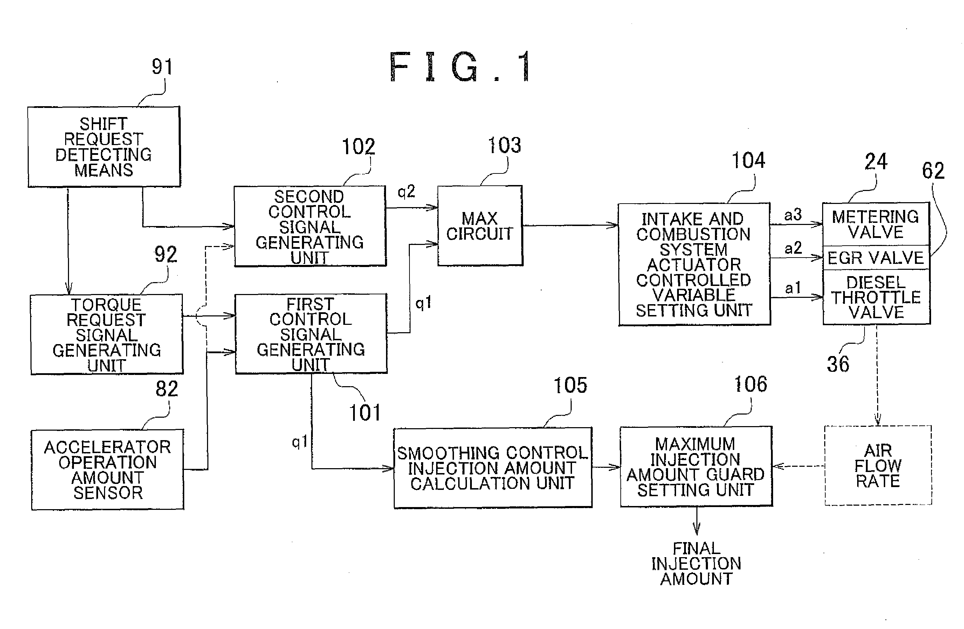

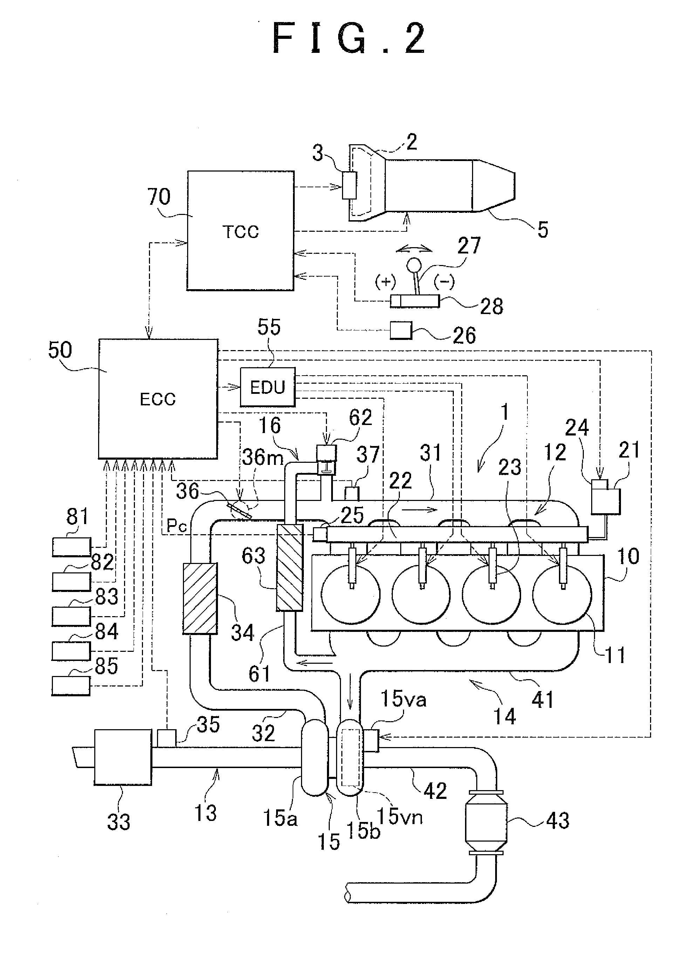

FIG. 1 is a block diagram that shows the conceptual configuration of an output controller for a vehicle engine according to the embodiment of the invention. FIG. 2 is a schematic configuration diagram of the vehicle engine and the output controller according to the embodiment of the invention, and shows an example in which the aspect of the invention is applied to a multi-cylinder diesel engine.

First, the configuration will be described.

The engine 1 shown in FIG. 2 is a driving source for propelling a vehicle. The engine 1 outputs rotational power to an automatic transmission 5 having a known torque converter 2 and a known lock-up mechanism 3.

The engine 1 is, for example, a diesel engine, and has a plurality of cylinders 11 in its engine block 10. The engine 1 is equipped with a common-rail fuel injection system 12, an intake system 13, an exhaust system 14, a turbocharger 15, and an EGR system 16. The common-rail fuel injection system 12 injects fuel into a combustion chamber (not shown in detail) of each cylinder 11. The intake system 13 introduces air into the combustion chambers. The exhaust system 14 exhausts exhaust gas from the combustion chambers. The turbocharger 15 compresses air in the intake system 13 using exhaust energy in the exhaust system 14 to supercharge the air into the combustion chambers. The EGR system 16 returns part of exhaust gas to an intake side for recirculation.

The automatic transmission 5 is, for example, a multistage gear (stepped) transmission that has a so-called sequential manual shift function. A mode selection switch 26, a shift lever 27 and a shift position sensor 28 are provided inside a vehicle cabin. The mode selection switch 26 is operated to select any one of a plurality of driving modes, such as an automatic shift mode and a manual shift mode, in accordance with, for example, driver's preference. The shift lever 27 allows lever operation in the manual shift mode, including selecting operation of the mode selection switch 26, and range selecting operation in the automatic shift mode. When the shift lever 27 is operated within the lever operation range of the sequential manual shift mode, the shift position sensor 28, for example, detects operation of tilting the shift lever 27 toward one side in the operation range as an upshift request operation and detects operation of tilting the shift lever 27 toward the other side in the operation range as a downshift request operation. Note that the automatic transmission 5 may be a continuously variable transmission (CVT) that has a manual shift function, such as a so-called sport shift.

The fuel injection system 12 includes a supply pump 21, a common rail 22 and injectors 23. The supply pump 21 integrates a feed pump that pumps up fuel (for example, light oil) from a fuel tank (not shown) and a plunger pressure pump that pressurizes the pumped fuel to a high pressure. The common rail 22 accumulates and stores high-pressure fuel discharged from the supply pump 21. Each of the injectors 23 injects fuel, supplied through the common rail 22, into the combustion chamber of the engine 1 at a timing and an opening degree (duty ratio) corresponding to an injection command signal from an engine control computer (hereinafter, referred to as ECC) 50, which will be described later.

The supply pump 21 has an electromagnetic metering valve 24 (third actuator), which is a variable throttle element, and an intake-side check valve (not shown) between the feed pump and the pressure pump. The supply pump 21 meters a fuel intake rate by the metering valve 24 while allowing the pressure pump to draw fuel through the intake-side check valve. In addition, the supply pump 21 supplies high-pressure fuel, pressurized by the pressure pump, to the common rail 22 through a discharge-side check valve (not shown).

The common rail 22 is equipped with a pressure limiter, which is formed of a known relief valve, and a fuel pressure sensor 25. The metering valve 24 is controlled by the ECC 50 on the basis of an actual common rail pressure (pressure of fuel in the common rail 22) detected by the fuel pressure sensor 25 and a target common rail pressure set by the ECC 50 in accordance with an operating state, thus controlling the common rail pressure to the target common rail pressure.

The supply pump 21 is, for example, driven using the rotational power of the engine 1. The common rail 22 equally accumulates high-pressure fuel supplied from the supply pump 21 while distributing and supplying the fuel to the plurality of injectors 23.

The plurality of injectors 23 are respectively formed of known electromagnetically driven needle valves, and are connected by wire to a known electronic distribution unit (EDU) 55 for driving injection, which is a drive unit for these injectors 23. These injectors 23 respectively have injection ports (no reference numerals are assigned) exposed to the combustion chambers of the cylinders 11 and are connected to the common rail 22. The injectors 23 are driven to open so as to inject fuel into the corresponding cylinders 11 from the injection ports when supplied with electric current from the EDU 55. In addition, on the basis of an injection command signal from the ECC 50, the EDU 55 is configured to inject high-pressure fuel from the injector 23 corresponding to the cylinder 11 in the compression stroke, from among the plurality of injectors 23 connected to the common rail 22, at a fuel injection amount according to the injection command signal into the combustion chamber of that cylinder 11.

The intake system 13 includes an intake manifold 31, an intake pipe 32, an air cleaner 33, an intercooler 34, an air flow meter 35, a diesel throttle valve 36 (second actuator) and an intake air temperature sensor 37. The intake pipe 32 is located upstream of the intake manifold 31. The air cleaner 33 cleans intake air by a filter at a location upstream of the intake pipe 32. The intercooler 34 cools intake air, heated by supercharging, at a location downstream of the turbocharger 15. The air flow meter 35 detects the flow rate of intake fresh air. The diesel throttle valve 36 is able to adjust the flow rate of intake fresh air into the engine 1 and change the outlet pressure of the EGR system 16. The above configuration is similar to a known configuration.

The exhaust system 14 includes an exhaust manifold 41, an exhaust pipe 42, and an exhaust gas aftertreatment device 43. The exhaust pipe 42 is located downstream of the exhaust manifold 41. The exhaust gas aftertreatment device 43 is attached to the exhaust pipe 42 at a location downstream of the turbocharger 15. Note that the exhaust gas aftertreatment device 43 is, for example, a known device that uses a known oxidation catalyst and a diesel particulate filter (DPF). The oxidation catalyst is able to oxidize hydrocarbon HC and carbon monoxide CO, which are unburned fuel in exhaust gas, to water H₂O and carbon dioxide CO₂, respectively. The DPF traps PM components in exhaust gas that has passed through the oxidation catalyst.

The turbocharger 15 is of a variable capacity type and includes an intake air compressor 15a and an exhaust gas turbine 15b that are coupled to each other so as to rotate in the same direction. The turbocharger 15 rotates the exhaust gas turbine 15b by exhaust energy to rotate the intake air compressor 15a, thus making it possible to draw positive-pressure air into the engine 1.

Although not shown in the drawing in detail, the exhaust gas turbine 15b of the turbocharger 15 has a plurality of movable nozzle vanes 15vn arranged in an exhaust passage around turbine blades. The exhaust gas turbine 15b is able to throttle a variable nozzle so as to increase the flow rate (relative flow rate with respect to the turbine blades) of exhaust gas that drives the exhaust gas turbine 15b by pivoting the movable nozzle vanes 15vn or is able to open the variable nozzle so as to reduce the relative flow rate. Then, an actuator 15va controls the plurality of movable nozzle vanes 15vn (variable nozzle) of the turbocharger 15 of this variable nozzle type. The actuator 15va is controlled by the ECC 50.

The EGR system 16 includes an EGR passage 61 for exhaust gas recirculation, which bypasses the combustion chambers of the engine 1 to provide fluid communication between the exhaust passage of the exhaust manifold 41 and the intake passage of the intake manifold 31. For example, a negative pressure EGR valve 62 (second actuator, exhaust gas recirculation valve) and an EGR cooler 63 (exhaust gas cooler) are provided in the EGR passage 61. The EGR valve 62 adjusts the exhaust gas recirculation rate. The EGR cooler 63 cools exhaust gas that returns through the EGR passage 61. The EGR passage 61 is an exhaust gas recirculation passage that returns part of exhaust gas from the exhaust passage of the engine 1 to the intake passage of the engine 1. The EGR cooler 63 uses part of the exhaust gas recirculation passage as a cooling passage. In addition, the EGR valve 62 may be switched among an open state in which the exhaust gas recirculation passage is connected to the intake passage, a throttle state in which the connection is limited in a stepped manner, and a closed state in which the connection is shut off.

The ECC 50 controls a plurality of actuators on the basis of sensor information from a group of sensors, which will be described later, to electronically control the engine 1. The plurality of actuators are various actuators that are equipped for the engine 1 so as to control the operating state of the engine 1. The plurality of actuators, for example, include an actuator 36m, a negative pressure control valve (not shown), a switching valve (not shown), the electromagnetic metering valve 24, the injectors 23, the actuator 15va, a plurality of relay circuits (not shown), and the like. The actuator 36m controls the opening degree of the diesel throttle valve 36 shown in FIG. 2. The negative pressure control valve controls the opening degree of the diaphragm EGR valve 62. The switching valve is used to release negative pressure when the EGR valve 62 is closed (turned off). The injectors 23 are electromagnetic fuel injection valves. The actuator 15va is used to control the movable nozzle vanes 15vn.

Although a specific hardware configuration is not shown in the drawing, the ECC 50 includes a central processing unit (CPU), a read only memory (ROM), a random access memory (RAM), and a backup memory, such as a nonvolatile memory. The ECC 50 further includes an input interface circuit, an output interface circuit, and a communication interface. The input interface circuit includes an A/D converter, and the like. The output interface circuit includes a driver circuit, and the like. The communication interface is used to establish communication with another in-vehicle ECU, such as a transmission control computer (hereinafter, referred to as TCC) 70 that controls the automatic transmission 5.

The ECC 50 includes a ROM that stores a control program for calculating an optimal injection timing and injection amount based on the rotational speed and load of the engine 1 and a control program for adjusting the opening degree of the metering valve 24 to cause the pressure of fuel in the common rail 22 to track the target fuel common rail pressure suitable for the operating state of the engine 1. The ECC 50 generates a command signal to the EDU 55 so as to inject fuel into the cylinder 11 at a timing, at which the compression stroke has been substantially completed, from among the plurality of cylinders 11 of the engine 1.

In addition, the ECC 50 receives a signal Pc detected by the fuel pressure sensor 25 to detect the pressure of fuel in the common rail 22, that is, an actual common rail pressure. Then, the ECC 50 compares the actual common rail pressure with the target common rail pressure set on the basis of the operating state of the engine 1, and adjusts the opening degree of the metering valve 24 so that the actual common rail pressure in the common rail 22 coincides with the target common rail pressure.

Furthermore, other than the fuel pressure sensor 25, a group of sensors, such as a rotational speed sensor 81 (rotational speed detecting means), an accelerator operation amount sensor 82, a vehicle speed sensor 83, a coolant temperature sensor 84 and a supercharging pressure sensor 85, are connected to the ECC 50. The rotational speed sensor 81 detects the crank rotational speed of the engine 1. The accelerator operation amount sensor 82 detects the accelerator operation amount of a vehicle (not shown) equipped with the engine 1. The vehicle speed sensor 83 detects the speed of the vehicle. The coolant temperature sensor 84 detects the coolant temperature of the engine 1.

In accordance with the control program prestored in the ROM, the ECC 50, for example, receives a pulse signal from the rotational speed sensor 81 as a crank rotation signal of the engine 1 and a cylinder determination signal (for example, a signal corresponding to a no-tooth position of a pulser) by which it is possible to determine the cylinder that shifts from the compression stroke into the expansion stroke, and, in addition, receives the accelerator operation amount from the accelerator operation amount sensor 82 to thereby understand the engine rotational speed, load, and the injection timing cylinder. Then, the ECC 50 sets the target common rail pressure of the common rail 22 during operation of the engine 1 while calculating an injection timing and a fuel injection amount so that fuel corresponding to the engine rotational speed and load may be injected into the injection timing cylinder at an optimal timing. In addition, the ECC 50, in cooperation with the EDU 55, outputs an opening degree adjustment signal (see FIG. 1) to the metering valve 24 and injection command signals to electromagnetic valve portions of the injectors 23 at appropriate timings to control the injection amounts, injection durations and injection rates of fuel injected by the injectors 23. Note that such a control is generally known, so the description thereof is omitted.

On the other hand, information detected by the mode selection switch 26 and shift position sensor 28 at the automatic transmission 5 is input to the transmission control computer 70 (hereinafter, referred to as TCC 70) that electronically controls the automatic transmission 5 on the basis of the operating state of the vehicle.

The TCC 70 regularly executes control for optimizing shift operation of the automatic transmission 5 and lock-up operation on the basis of the operating state of the vehicle, such as data of an injection amount that the ECC 50 instructs the EDU 55, a shift position detected by the shift position sensor 28, pieces of sensor information from the accelerator operation amount sensor 82, the vehicle speed sensor 83 and the coolant temperature sensor 84. In addition, the TCC 70 outputs information regarding a required engine output at the time of shifting to the ECC 50 to execute control that gives a smooth shift characteristic in combination with output control over the engine 1 by the ECC 50.

Specifically, for example, when the shift lever 27 is operated for upshifting or downshifting in a state where the sequential manual shift mode is set by the mode selection switch 26, the TCC 70 detects that operation by the shift position sensor 28. Then, the TCC 70 sets the combustion state of the engine 1, engagement states of friction engagement elements of the automatic transmission 5, a combination of speed ratios before and after shifting, and the like, so that the driver can feel an acceleration or a deceleration corresponding to the shift operation, and then the TCC 70 outputs a torque increase request to the ECC 50 at the time of downshifting or outputs a torque reduction request to the ECC 50 at the time of upshifting.

Here, the TCC 70, together with the mode selection switch 26, the shift lever 27 and the shift position sensor 28, constitutes shift request detecting means 91 (see FIG. 1) that detects a shift request signal for requiring the automatic transmission 5 to shift speeds. Note that the shift request detecting means 91 may be the one that detects a shift request operation with a different way of input, such as paddle shift operation, or may be the one that detects input operation that influences whether to shift speeds, such as brake operation by the driver. Furthermore, it is also applicable that, when the TCC 70 determines that it is necessary to shift speeds on the basis of various input operations, an operating state, and a vehicle driving environment (inclination of a road surface, or the like), the determination may be regarded as a condition that a shift request signal is detected by the shift request detecting means 91.

As shown by the schematic block diagram in FIG. 1, in the present embodiment, such an integrated control is executed that, when the shift request signal is detected by the shift request detecting means 91 at least in the manual shift mode in this way, a torque request signal that requires a torque output from the engine 1 to vary in response to shift operation of the automatic transmission 5 is generated by a torque request signal generating unit 92 of the TCC 70 as a torque increase request signal or a torque reduction request signal, and, furthermore, the ECC 50 controls at least the injectors 23 (first actuator) that actually carry out fuel injection in the engine 1 among the plurality of actuators on the basis of the torque request signal from the TCC 70.

Here, the ECC 50 functionally includes a first control signal generating unit 101. When the shift request signal is detected by the shift request detecting means 91, the first control signal generating unit 101 generates a first control signal q1 (required injection amount that reflects a torque change request) for requiring a fuel injection amount corresponding to the torque request signal from the TCC 70. Any one of the ECC 50 and the TCC 70, for example, the TCC 70, functionally includes a second control signal generating unit 102. When the shift request signal is detected by the shift request detecting means 91, the second control signal generating unit 102 generates a second control signal that requires a fuel injection amount q2 (required injection amount that does not reflect a torque change request) that does not correspond to the torque request signal from the TCC 70.

In addition, the ECC 50 includes a MAX circuit 103 (control signal selecting unit). When the shift request signal is detected by the shift request detecting means 91, the MAX circuit 103 selects a control signal q1 or q2, of which the required fuel injection amount is larger, between the first control signal q1 and the second control signal q2, and then controls specific actuators other than the injectors 23 among the plurality of actuators, such as the actuators of the intake system and combustion system, which will be described later, on the basis of the control signal q1 or q2 of which the required fuel injection amount is larger.

Specifically, the ECC 50 includes an intake and combustion system actuator controlled variable setting unit 104, a smoothing control injection amount calculation unit 105, and a maximum injection amount guard setting unit 106. The intake and combustion system actuator controlled variable setting unit 104 sets controlled variables of intake and combustion system actuators, such as the diesel throttle valve 36, the actuator 36m that controls the opening degree of the diesel throttle valve 36, the negative pressure control valve of the EGR valve 62, the switching valve for releasing negative pressure when the EGR valve 62 is closed (turned off), the electromagnetic metering valve 24, and the actuator 15va for controlling the variable nozzle (hereinafter, these are collectively referred to as specific actuators 24, 36 and 62) on the basis of an output from the MAX circuit 103. The smoothing control injection amount calculation unit 105, when receiving a torque increase request from the TCC 70, calculates an injection amount for so-called smoothing control. The injection amount for smoothing control further adds a governor injection amount (corresponding to the first control signal q1), which adds in a torque increase amount, to a correction amount for drivability, smoke suppression, and the like. The maximum injection amount guard setting unit 106 calculates a maximum injection amount guard value from an internal map on the basis of the intake air flow rate, and the like, in order to guard the result calculated by the smoothing control injection amount calculation unit 105 at the maximum injection amount guard value. Then, a final injection amount is determined so as to be smaller than or equal to the maximum injection amount guard value, and fuel of the final injection amount is injected from the injector 23 of the injection timing cylinder 11.

That is, when the shift request signal is detected by the shift request detecting means 91, the first control signal generating unit 101 of the ECC 50 generates the first control signal q1 that is a signal for requiring a fuel injection amount to vary in accordance with the torque request signal from the TCC 70 and that controls the injectors 23. The second control signal generating unit 102 provided for any one of the ECC 50 and the TCC 70 generates the second control signal q2 (prospective torque request signal and/or EGR control injection amount, which will be described later) that is a signal of which a required fuel injection amount temporarily becomes larger than that of the first control signal q1 when the shift request signal is detected by the shift request detecting means 91 and that controls the specific actuators 24, 36 and 62, other than the injectors 23, among the plurality of actuators. The MAX circuit 103 of the ECC 50 selects the control signal q1 or q2, of which the required fuel injection amount is larger, between the first control signal q1 and the second control signal q2, so the controlled variables of the specific actuators other than the injectors 23, such as the actuator 36m that controls the opening degree of the diesel throttle valve 36, the negative pressure control valve of the EGR valve 62, the switching valve for releasing negative pressure when the EGR valve 62 is closed (turned off), the electromagnetic metering valve 24, the actuator 15va for controlling the variable nozzle, and the like, are determined under the condition different from the condition under which the injectors 23 are controlled.

More specifically, when the torque request signal is a torque increase request signal that requires a torque output from the engine 1 to increase in response to shift operation of the automatic transmission 5, the second control signal generating unit 102 generates a prospective torque request signal prior to transmission of the torque increase request signal on the basis of the information detected by the shift request detecting means 91.

The prospective torque request signal corresponds to a torque value that should be increased or reduced during shifting or an increased or reduced torque value on the basis of a combination of speed ratios before and after current upshift or downshift, a current engine rotational speed and a current load. When the torque value of the prospective torque request is calculated by the ECC 50, information detected by the shift request detecting means 91 and information regarding the combination of speed ratios before and after shifting, or the like, are transmitted from the TCC 70 to the ECC 50 through, for example, controller area network (CAN) communication.

When the prospective torque request signal is generated, that is, during a period from when the shift request signal is detected by the shift request detecting means 91 until the torque request signal from the TCC 70 is received by the ECC 50, the output of the MAX circuit 103 is the second control signal q2 corresponding to the prospective torque request signal.

The second control signal q2 corresponding to the prospective torque request signal is a value corresponding to a so-called governor injection amount (which is an injection amount that is not corrected for drivability and smoke suppression and is a basic injection amount by which a current engine rotational speed coincides with a target rotational speed) calculated by the ECC 50 on the basis of, for example, an engine rotational speed, a current load, a combination of speed ratios, and the like.

The intake and combustion system actuator controlled variable setting unit 104 receives the second control signal q2 corresponding to the prospective torque request signal, which does not reflect a torque increase request, before the injectors 23 are controlled by the first control signal q1 in accordance with the torque increase request, and then generates controlled variables for respectively controlling the opening degree of the EGR valve 62 of the EGR system 16, the opening degree of the diesel throttle valve 36 and the opening degree of the metering valve 24 as controlled values a1, a2 and a3 (injection amount for controlling the intake and combustion system actuators) corresponding to an injection amount and calculated from the map of injection amount versus engine rotational speed, prestored in the ECC 50. That is, the opening degree of the EGR valve 62 of the EGR system 16, the opening degree of the diesel throttle valve 36 and the opening degree of the metering valve 24 are respectively varied to the opening degrees corresponding to the controlled values a1, a2 and a3 that correspond to the injection amount before the injectors 23 are driven for injection in accordance with the original torque request signal from the TCC 70.

In addition, when the controlled variables for respectively controlling the EGR valve opening degree, the diesel throttle opening degree and the common rail pressure (Pcr) are, for example, determined by referring to a Q-NE map that specifies the controlled variables on the basis of a fuel injection amount (Q) and an engine rotational speed (NE), the controlled values a1, a2 and a3 corresponding to the injection amount are determined as the fuel injection amount Q, and the engine rotational speed NE is determined. This specifies the opening degrees (%) at positions (operating state) corresponding to those controlled values.

In the existing art, the controlled variables of the EGR opening degree, and the like, are calculated in accordance with a variation in actual injection amount, whereas, in the present embodiment, the controlled variables (controlled variables that give a combustion state obtained in order to attain a target rotational speed), which are targets of the EGR opening degree, diesel throttle opening degree, basic injection pressure corresponding to a common rail pressure, and the like, are determined by referring to the Q-NE map on the basis of the controlled values a1, a2 and a3 corresponding to the prospective injection amount (governor injection amount), and then the EGR valve 62, the diesel throttle opening degree control actuator 36m and the metering valve 24, which are the actuators for operating those controlled variables, are operated prior to reception of the torque increase request.

When no shift operation is performed, the ECC 50 basically determines the opening degrees of the EGR valve 62, diesel throttle valve 36 and metering valve 24 on the basis of an actual fuel injection amount injected by the injectors 23. When there is a shift request, the ECC 50, when receiving the torque increase request from the TCC 70, executes output control by adding the torque increase amount. In addition, as the fuel injection amount (load) decreases, the ECC 50 increases the EGR rate.

On the other hand, when the torque request signal from the TCC 70 is a torque reduction request signal that requires a torque output from the engine 1 to reduce or decrease in response to shift operation of the automatic transmission, any one of the TCC 70 and the ECC 50, for example, the TCC 70, generates the second control signal q2 so as to vary in accordance with an actual fuel injection amount without reflecting the torque request signal at the time when the automatic transmission 5 shifts speeds. Then, the ECC 50 executes control over the EGR valve 62, the diesel throttle valve 36 and the metering valve 24, which are the specific actuators other than the injectors 23, on the basis of the actual fuel injection amount in accordance with the second control signal q2 independent of control over the injectors 23 in accordance with the torque reduction request signal.

Specifically, when the torque request signal from the TCC 70 is a torque reduction request signal, the second control signal generating unit 102 outputs the second control signal q2 corresponding to a governor injection amount on the basis of information detected by the shift request detecting means 91, and the like, or, in addition, accelerator operation amount information from the accelerator operation amount sensor 82, and the like.

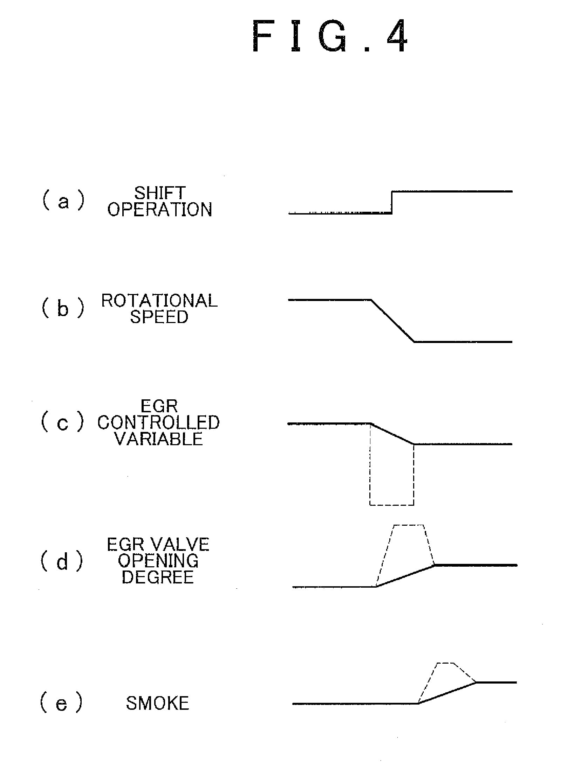

After the shift request signal is detected by the shift request detecting means 91, the torque reduction request signal from the TCC 70 is received by the ECC 50, and then the first control signal q1 from the first control signal generating unit 101 decreases by reflecting the torque reduction request. Thus, when the engine rotational speed decreases with a decrease in actual injection amount (see FIG. 4(b)), the output of the MAX circuit 103 is the torque request signal corresponding to the governor injection amount.

In this case, the intake and combustion system actuator controlled variable setting unit 104 receives the second control signal q2 corresponding to the governor injection amount that does not reflect the torque reduction request substantially at the same time when the injectors 23 are controlled by the first control signal q1 in accordance with the torque reduction request. Then, the intake and combustion system actuator controlled variable setting unit 104 generates the controlled variables for respectively controlling the opening degree of the EGR valve 62 of the EGR system 16, the opening degree of the diesel throttle valve 36 and the opening degree of the metering valve 24 as controlled values a1, a2 and a3 corresponding to an injection amount and calculated from the map of injection amount versus engine rotational speed, prestored in the ECC 50.

Next, the operation will be described.

In the above configured output controller for a vehicle engine according to the present embodiment, when no shift operation is performed, the ECC 50 calculates an optimal injection timing and an optimal injection amount on the basis of the rotational speed and load of the engine 1 to control an actual fuel injection amount injected by the injectors 23, while, at the same time, the ECC 50 determines the opening degrees of the EGR valve 62, diesel throttle valve 36 and metering valve 24 on the basis of that fuel injection amount to control the opening degrees to values suitable for the operating state of the engine 1.

### Torque Increase Request

When a shift request signal is generated, for example, when a torque increase request for downshifting is issued under a situation that sport shift control, which is a sequential manual shift mode, is executed in the automatic transmission 5, the ECC 50, when receiving the torque increase request from the TCC 70, executes engine output control by adding the torque increase amount.

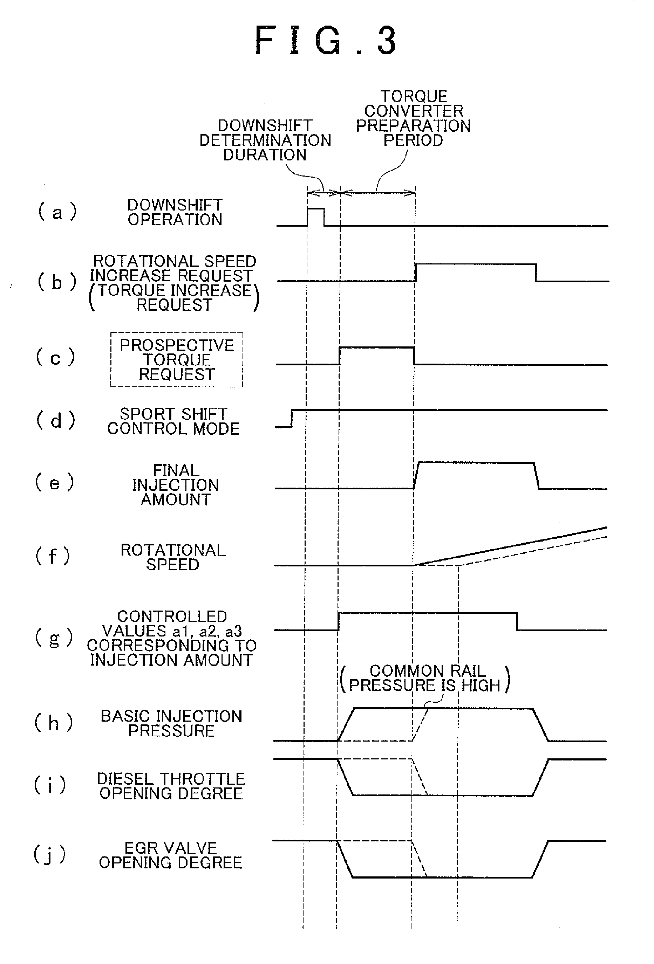

FIG. 3 is a timing chart that shows an example of output control at the time when a torque increase request is issued, the output control being executed in the output controller for a vehicle engine according to the present embodiment, and shows changes in major control signals when sport shift control, which is the sequential manual shift mode in the automatic transmission 5, is executed.

First, as the manual shift mode is selected by the mode selection switch 26, sport shift control is started (see FIG. 3(d)).

In this state, for example, as the shift lever 27 is operated for upshift request so as to be tilted toward one side in the lever operation range of the manual shift mode or is operated for downshift request so as to be tilted toward the other side in the lever operation range, such an operation, for example, downshift operation, is detected by the shift request detecting means 91, such as the shift position sensor 28, and then the TCC 70 determines whether the automatic transmission 5 downshifts (see FIG. 3(a)). Note that "downshift determination duration" in FIG. 3(a) is a period of time from when shift operation is detected until a prospective torque request signal is generated.

Here, when the TCC 70 determines that the automatic transmission 5 downshifts, a hydraulic pressure, or the like, of the torque converter 2 equipped for the automatic transmission 5 is increased to a hydraulic pressure higher than the hydraulic pressure before shifting, and then preparation for, for example, releasing an engaged state of the friction engagement element before shifting is carried out during a preparation period indicated as "torque converter preparation period" in FIG. 3(a), for example, during a period of about 100 milliseconds.

In addition, when an increase in torque is necessary during downshifting and fuel injection of a final fuel injection amount should be carried out, a torque increase request signal is transmitted from the TCC 70 as a rotational speed increase request period, and then the torque increase request signal is received by the ECC 50 (see FIG. 3(b)).

At this time, as the ECC 50 receives the torque increase request from the TCC 70, the ECC 50 calculates a fuel injection amount that varies in accordance with the torque request signal, that is, the first control signal q1 that requires a governor injection amount, which adds in a torque increase amount, and then calculates an injection amount for so-called smoothing control, which adds in a correction amount for drivability, smoke suppression, and the like, from the above calculated value. The ECC 50 determines a final injection amount so that the calculated injection amount is smaller than or equal to a guard value, which is a maximum injection amount based on an intake air flow rate, and the like. Then, fuel of the final injection amount is injected from the injector 23 of the injection timing cylinder 11 (see FIG. 3(e)).

On the other hand, in any one of the TCC 70 and the ECC 50, for example, in the TCC 70, immediately as the shift request signal is detected by the shift request detecting means 91, that is, during the torque increase request period before the rotational speed increase request period shown in FIG. 3(b), a prospective torque request signal by which a required fuel injection amount becomes temporarily larger than that of the first control signal q1 is generated (see FIG. 3(c)).

Then, in the ECC 50, the controlled variables as the second control signal q2 corresponding to the prospective torque request signal, that is, the controlled variables for respectively controlling the opening degree of the EGR valve 62, the opening degree of the diesel throttle valve 36 and the opening degree of the metering valve 24, are respectively calculated as controlled values a1, a2 and a3 corresponding to an injection amount from the map of injection amount versus engine rotational speed, stored in the ROM, or the like, of the ECC 50 (see FIG. 3(g)).

The first control signal q1 or the second control signal q2, of which a required injection amount is larger, is selected by the MAX circuit 103. Thus, during the torque converter preparation period (see FIG. 3(a)) before the torque increase request period, the second control signal q2 corresponding to the prospective torque request signal that does not reflect the torque increase request is input to the intake and combustion system actuator controlled variable setting unit 104, whereas, during the torque increase request period, the first control signal q1 that requires a governor injection amount, which adds in a torque increase amount, is input to the intake and combustion system actuator controlled variable setting unit 104.

Thus, during the torque converter preparation period, the intake and combustion system actuator controlled variable setting unit 104 generates the controlled variables for respectively controlling the opening degree of the EGR valve 62 of the EGR system 16, the opening degree of the diesel throttle valve 36 and the opening degree of the metering valve 24 as the controlled values a1, a2 and a3 corresponding to the injection amount, and starts controlling the opening degree of the EGR valve 62, the opening degree of the diesel throttle valve 36 and the opening degree of the metering valve 24 to the opening degrees corresponding to the controlled values a1, a2 and a3 corresponding to the injection amount prior to driving the injectors 23 for injection in accordance with the original torque request signal from the TCC 70.

Then, as the torque converter preparation period elapses and enters the torque increase request period, fuel injection of the final injection amount from the injectors 23 is carried out in accordance with the torque request signal from the TCC 70, while the opening degree of the EGR valve 62, the opening degree of the diesel throttle valve 36 and the opening degree of the metering valve 24 are maintained at substantially the same opening degrees as those opening degrees during the torque converter preparation period.

Thus, in the existing method in which the opening degree of the EGR valve 62, the opening degree of the diesel throttle valve 36 and the opening degree of the metering valve 24 are controlled in synchronization with the rotational speed increase request period, as indicated by the broken line in FIG. 3(f), the engine rotational speed starts to increase after a delay from the timing (see FIG. 3(e)) at which injection, which adds in a torque increase amount, is started by the injectors 23. In contrast, in the present embodiment, control over the opening degree of the diesel throttle valve 36 and the opening degree of the metering valve 24 is started in accordance with the prospective torque request signal prior to the torque increase request from the TCC 70. Thus, when the basic injection amount is increased substantially at the same time with the timing at which injection, which adds in a torque increase amount, is started by the injectors 23, the diesel throttle opening degree and the EGR valve opening degree are sufficiently reduced (see FIG. 3(g) to FIG. 3(j)).

This eliminates the problem that the fuel injection amount is limited because of a delay in response of the intake and combustion system actuators other than the injectors 23 to the torque increase request. As indicated by the solid line in FIG. 3(f), response to the torque increase request is reliably increased as compared with the existing art.

### Torque Reduction Request

On the other hand, for example, when a torque reduction request for upshifting is issued under a situation that sport shift control is executed, the ECC 50, when receiving the torque reduction request from the TCC 70, executes engine output control that reduces torque by a required torque reduction amount.

FIG. 4 is a timing chart that shows an example of output control at the time when a torque reduction request is issued, the output control being executed in the output controller for a vehicle engine according to the present embodiment, and shows changes in major control signals when sport shift control, which is the sequential manual shift mode in the automatic transmission 5, is executed.

In this case, any one of the TCC 70 and the ECC 50, for example, the TCC 70, generates the second control signal q2 so as to vary in accordance with an actual fuel injection amount that does not reflect the torque request signal when the automatic transmission 5 shifts speeds. In addition, the ECC 50 changes control over the specific actuators 24, 36 and 62 other than the injectors 23 on the basis of the actual fuel injection amount in accordance with the second control signal q2 independent of control over the injectors 23 in accordance with the torque reduction request signal.

Specifically, when the torque request signal from the TCC 70 is a torque reduction request signal, the second control signal generating unit 102 outputs the second control signal q2 corresponding to the governor injection amount on the basis of information detected by the shift request detecting means 91, or the like, or, in addition to the information detected by the shift request detecting means 91, accelerator operation amount information from the accelerator operation amount sensor 82, or the like.

Thus, after the shift request signal is detected by the shift request detecting means 91, the torque reduction request signal from the TCC 70 is received by the ECC 50. Then, when the first control signal q1 from the first control signal generating unit 101 decreases by reflecting the torque reduction request and the engine rotational speed decreases with a decrease in actual injection amount (see FIG. 4(b)), the output of the MAX circuit 103 is a torque request signal corresponding to the governor injection amount.

At this time, the intake and combustion system actuator controlled variable setting unit 104 undergoes lower limit guard control on the basis of the second control signal q2 corresponding to the governor injection amount without reflecting the torque reduction request substantially at the same time when the injectors 23 are controlled on the basis of the first control signal q1 in accordance with the torque reduction request. Thus, when the controlled variables for respectively controlling the opening degree of the EGR valve 62 of the EGR system 16, the opening degree of the diesel throttle valve 36 and the opening degree of the metering valve 24 are calculated from the map of injection amount versus engine rotational speed by the intake and combustion system actuator controlled variable setting unit 104, a fuel injection amount that reflects the torque reduction request overlaps the influence of decrease in engine rotational speed in accordance with the decrease in fuel injection amount. Thus, as shown in FIG. 4(c) to FIG. 4(e), the opening degree of the EGR valve 62 of the EGR system 16, the opening degree of the diesel throttle valve 36 and the opening degree of the metering valve 24, which are the intake and combustion system actuators other than the injectors, do not steeply vary (see the broken line in the drawing, for example, the EGR rate steeply increases). This eliminates the problem that, for example, smoke occurs because of insufficient, oxygen due to an excessive EGR rate. Operation

As described above, in the output controller for a vehicle engine according to the present embodiment, in the case of a torque increase request, when a shift request signal is detected by the shift request detecting means 91, the second control signal q2 corresponding to the lookahead prospective torque request is generated prior to the first control signal q1 corresponding to the torque increase request to start controlling the EGR valve 62, the diesel throttle valve 36 and the metering valve 24, which are specific actuators other than the injectors 23, prior to the torque increase request. This eliminates a situation that the injection amount is limited because of a delay in response of these specific actuators. Thus, it is possible to ensure high response to the torque increase request. This ensures high response such that a target rotational speed can be promptly reached in response to the torque increase request. Thus, a favorable acceleration or deceleration experienced by the driver against shift operation may be obtained at an optimal timing. In addition, in the case of a torque reduction request as well, even when the first control signal q1 steeply decreases because of a decrease in injection amount corresponding to the torque reduction request and a decrease in engine rotational speed in accordance with the decrease in injection amount, it is possible to prevent adverse influence, or the like, on the exhaust gas purification performance due to a steep variation in the controlled variables of the specific actuators 24, 36 and 62 by guarding the controlled variables of the specific actuators 24, 36 and 62 by the controlled variables of the second control signal q2.

That is, according to the present embodiment, it is possible to provide the output controller for a vehicle engine, which is able to execute high response torque control in the ECC 50 in response to a torque request from the TCC 70 during shifting and, in addition, is able to effectively suppress a decrease in exhaust gas purification performance.

In the present embodiment, the diesel throttle valve 36 and the EGR valve 62 that control intake air of the engine 1 as the second actuator and the metering valve 24 that controls the amount of high-pressure fuel supplied to the common rail 22 as the third actuator are actuated prior to the torque increase request. This eliminates a situation that the injection amount is limited because of a delay in response of the intake and combustion systems. Thus, high response to the torque increase request may be obtained. In addition, in the case of a torque reduction request, the controlled variables of the second and third actuators are guarded by the controlled variables of the second control signal q2. This prevents adverse influence, or the like, on exhaust gas purification performance due to a steep variation in those controlled variables.

Furthermore, in the present embodiment, the TCC 70 has a stepped shift control mode in which the automatic transmission 5 is controlled on the basis of stepped shift operation, and any one of the TCC 70 and the ECC 50 outputs a prospective torque request signal when the automatic transmission 5 shifts speeds on the basis of shift operation in the stepped shift control mode. Thus, it is possible to responsively increase torque to shift operation in the stepped shift control mode that requires high torque response. This improves drivability of the vehicle.

Note that, in the above embodiment, the prospective torque request signal is generated by the TCC 70; instead, a prospective torque request itself may be generated by the ECC 50 prior to a timing at which a torque request signal is received from the TCC 70. In this case, information, such as a shift request signal, a shift timing and a combination of speed ratios before and after shifting, may be acquired from the shift request detecting means 91 and the TCC 70. In addition, it is also conceivable that the ECC 50 uses a prospective torque request value of which a required injection amount is different from (for example, smaller than) that of the torque request from the TCC 70, the ECC 50 uses one prospective torque request value selected on the basis of the operating state from among a plurality of preset prospective torque request values or the ECC 50 uses a preset fixed prospective torque request value. That is, a torque increase amount in a torque increase request from the TCC 70 during shifting is calculated as an optimal torque amount, and then a torque request is transmitted to the ECC 50. However, the prospective torque request is not necessarily an optimal value. It is also applicable that how much an increase in rotational speed regarding shifting is required is calculated by the ECC 50 more roughly than a torque increase request value is calculated by the TCC 70 to determine a prospective torque request value.

In addition, in the above embodiment, the diesel engine is employed; however, as long as the engine is an electronically controlled engine that uses actuators when a torque output from the engine is changed, the engine may be an internal combustion engine other than the diesel engine or an engine (power engine) other than the internal combustion engine.

Furthermore, the diesel throttle valve 36 and the EGR valve 62, which are the intake system actuators, are shown as an example of the second actuator; however, the second actuator may further include the actuator 15vn that variably controls the capacity of the turbocharger 15 or an actuator for controlling exhaust throttle when an exhaust throttle valve is provided for the exhaust pipe 42

In addition, the automatic transmission is not limited to an automatic continuously variable transmission (CVT) or an automatic stepped transmission. The aspect of the invention may be applied to an engine output controller for a vehicle equipped with a twin clutch direct shift gearbox (DSG).

As described above, the aspect of the invention generates a first control signal so as to vary in accordance with a torque request signal and a second control signal of which a required fuel injection amount temporarily becomes larger than that of the first control signal when a shift request signal is detected by the shift request detecting means, and specific actuators are controlled under a condition different from a condition under which the first actuator is controlled in accordance with the torque request signal. This eliminates the problem that an injection amount is limited because of a delay in response of the specific actuators at the time of a torque increase request, and it is possible to obtain high response to the torque increase request. In addition, because of a decrease in injection amount corresponding to the torque reduction request and a decrease in engine rotational speed in accordance with the decrease in injection amount, a steep variation in controlled variables of the specific actuators based on the injection amount and engine rotational speed is suppressed to make it possible to prevent adverse influence on exhaust gas purification performance, or the like. As a result, the aspect of the invention gives an advantageous effect such that it is possible to provide a vehicle engine output controller that is able to execute high response torque control in the engine control computer in response to a torque request from the transmission control computer during shifting and, in addition, is able to effectively suppress a decrease in exhaust gas purification performance. The aspect of the invention is useful for the general vehicle engine output controllers that control the torque output from an electronically controlled engine in response to a torque request from the transmission control computer in a vehicle equipped with the engine and an automatic transmission when the automatic transmission shifts speeds.

## Claims

1. A vehicle engine output controller that includes
an engine control computer (50) that electronically controls an engine (1) by controlling a plurality of actuators equipped for the engine (1) so as to control an operating state of the engine (1);
shift request detecting means (91) that requires an automatic transmission (5), which is mounted on a vehicle together with the engine (1) and is able to shift the speed of power output from the engine (1), to shift speeds; and
a transmission control computer (70) that electronically controls the automatic transmission (5) on the basis of the operating state of the vehicle, wherein
when a shift request signal is detected by the shift request detecting means (91), a torque request signal that requires a torque output from the engine (1) to change in response to shift operation of the automatic transmission (5) is generated by the transmission control computer (70), and the engine control computer (50) controls at least a first actuator (23) that actually carries out fuel injection in the engine (1) among the plurality of actuators in accordance with the torque request signal, the vehicle engine output controller **characterized in that**
the engine control computer (50) generates a first control signal (q1) that requires a fuel injection amount that varies in accordance with the torque request signal when the shift request signal is detected by the shift request detecting means (91) and that controls the first actuator (23),
one of the transmission control computer (70) and the engine control computer (50) generates a second control signal (q2) of which a required fuel injection amount temporarily becomes larger than that of the first control signal (q1) when the shift request signal is detected by the shift request detecting means (91) and that controls a specific actuator other than the first actuator (23) among the plurality of actuators, and
the engine control computer (50) controls the specific actuator under a condition different from a condition under which the first actuator (23) is controlled in accordance with the torque request signal.

2. The vehicle engine output controller according to claim 1, **characterized in that**
the engine control computer (50) includes a first control signal generating unit (101) and a control signal selecting unit (103), wherein, when a shift request signal is detected by the shift request detecting means (91), the first control signal generating unit (101) generates the first control signal (q1) that requires a fuel injection amount corresponding to the torque request signal, and wherein, when a shift request signal is detected by the shift request detecting means (91), the control signal selecting unit (103) selects a control signal, of which the required fuel injection amount is larger, between the first control signal (q1) and the second control signal (q2) and then controls the specific actuator using the control signal of which the required fuel injection amount is larger, and
one of the transmission control computer (70) and the engine control computer (50) includes a second control signal generating unit (102), wherein, when a shift request signal is detected by the shift request detecting means (91), the second control signal generating unit (102) generates the second control signal (q2) that requires a fuel injection amount that does not correspond to the torque request signal.

3. The vehicle engine output controller according to claim 1 or 2, **characterized in that**
when the torque request signal from the transmission control computer (70) is a torque increase request signal that requires a torque output from the engine (1) to increase in response to shift operation of the automatic transmission (5), one of the transmission control computer (70) and the engine control computer (50) generates a prospective torque request signal before transmission of the torque increase request signal on the basis of information detected by the shift request detecting means (91), and
the engine control computer (50) starts controlling the specific actuator using the second control signal (q2) corresponding to the prospective torque request signal before the first actuator (23) is controlled in accordance with the torque increase request signal.

4. The vehicle engine output controller according to claim 3, **characterized in that**
the transmission control computer (70) has a stepped shift control mode in which the automatic transmission (5) is controlled in accordance with stepped shift operation, and one of the transmission control computer (70) and the engine control computer (50) outputs the prospective torque request signal at the time of shifting in accordance the shift operation in the stepped shift control mode.

5. The vehicle engine output controller according to claim 1 or 2, **characterized in that**
when the torque request signal from the transmission control computer (70) is a torque reduction request signal that requires a torque output from the engine to reduce in response to shift operation of the automatic transmission (5), one of the transmission control computer (70) and the engine control computer (50) generates the second control signal (q2) so as to vary on the basis of an actual fuel injection amount without reflecting the torque request signal at the time when the automatic transmission (5) shifts speeds, and
the engine control computer (50) changes control over the specific actuator using the second control signal (q2) on the basis of the actual fuel injection amount independent of control over the first actuator (23) in accordance with the torque reduction request signal.

6. The vehicle engine output controller according to any one of claims 1 through 5, **characterized in that**
the engine (1) is a diesel engine, and the specific actuator includes a second actuator (36) that controls intake air of the engine (1).

7. The vehicle engine output controller according to claim 6, **characterized in that**
the engine (1) has an exhaust gas recirculation passage (61) from an exhaust side to an intake side, wherein the second actuator (36) includes a diesel throttle valve that controls an amount of intake fresh air in intake air of the engine (1) while changing an exhaust gas recirculation rate through the exhaust gas recirculation passage (61).

8. The vehicle engine output controller according to claim 6 or 7, **characterized in that**
the engine (1) has an exhaust gas recirculation passage (61) from an exhaust side to an intake side, and the second actuator (36) has an exhaust gas recirculation valve (62) that controls an exhaust gas recirculation rate through the exhaust gas recirculation passage (61).

9. The vehicle engine output controller according to any one of claims 1 through 8, **characterized in that**
the engine (1) is a diesel engine (1) with a common rail (22) that accumulates and stores fuel at a high pressure, and the specific actuator includes a third actuator (24) that controls an amount of high-pressure fuel supplied to the common rail (22).
